# EUROPEAN PATENT SPECIFICATION

(11) **EP 1 080 924 B1**
(45) Date of publication and mention of the grant of the patent: **17.09.2003**
(21) Application number: 00306384.9
(22) Date of filing: 27.07.2000
(51) Int. Cl.: B41J 2/335

(54) **Thermal head**
Thermodruckkopf
Tête d'impression thermique

(30) Priority: 02.08.1999 JP 21835299
(43) Date of publication of application: 07.03.2001
(73) Proprietor: Seiko Instruments Inc., Chiba-shi, Chiba (JP)
(72) Inventor: Sambongi, Norimitsu, c/o Seiko Instruments Inc., Chiba-shi, Chiba (JP)
(74) Representative: Sturt, Clifford Mark

(56) References cited:
- US-A- 5 477 266
- PATENT ABSTRACTS OF JAPAN vol. 016, no. 414 (M-1303), 2 September 1992 (1992-09-02) & JP 04 140153 A (ALPS ELECTRIC CO LTD), 14 May 1992 (1992-05-14)
- PATENT ABSTRACTS OF JAPAN vol. 017, no. 144 (M-1386), 23 March 1993 (1993-03-23) & JP 04 319448 A (SANKYO SEIKI MFG CO LTD), 10 November 1992 (1992-11-10)
- PATENT ABSTRACTS OF JAPAN vol. 014, no. 361 (M-1006), 6 August 1990 (1990-08-06) & JP 02 128863 A (GRAPHTEC CORP), 17 May 1990 (1990-05-17)
- PATENT ABSTRACTS OF JAPAN vol. 012, no. 340 (M-740), 13 September 1988 (1988-09-13) & JP 63 099964 A (MATSUSHITA ELECTRIC IND CO LTD), 2 May 1988 (1988-05-02)
- PATENT ABSTRACTS OF JAPAN vol. 015, no. 253 (M-1129), 27 June 1991 (1991-06-27) & JP 03 083659 A (SHARP CORP), 9 April 1991 (1991-04-09)
- PATENT ABSTRACTS OF JAPAN vol. 011, no. 205 (M-603), 3 July 1987 (1987-07-03) & JP 62 025067 A (RICOH CO LTD), 3 February 1987 (1987-02-03)

## Description

The present invention relates to a thermal head for use in thermal recording in a facsimile machine, a printer, or the like.

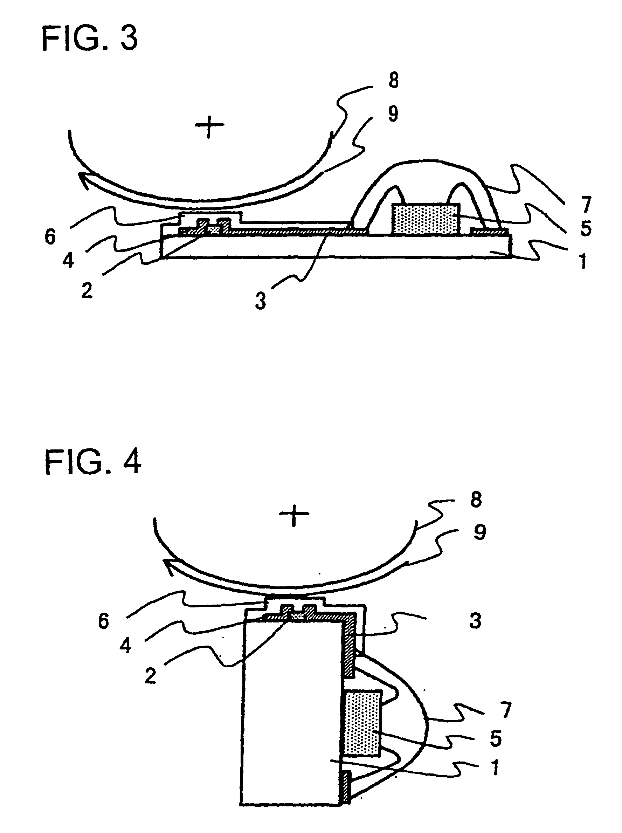

In a conventional thermal head, as shown in Fig. 3, an individual electrode 3 connected to one end of a heater resistor 2 is connected to a driving element 5. The other end of the heater resistor 2 is connected to a common electrode 4. All of them are provided on the same plane on an insulating substrate 1.

The individual electrode 3 and the driving element 5 are connected by wire bonding or flip chip. The driving element 5 and the connecting portion are, for protection, encapsulated on the periphery of the driving element using epoxy resin or the like. The encapsulation covers the whole of the driving element 5 and . the connecting portion, and further, for the purpose of securing the reliability, has the width and the height which are larger than those of the driving element 5 and the connecting portion. This follows that, in order to avoid interference with a platen for advancing paper by rotating together with the paper, the position of the encapsulation is required to be apart from the heater resistor 2 by a predetermined distance. However, on the other hand, in order to lower the cost of the thermal head, it is necessary to make the width of the substrate as small as possible to increase the number of the thermal heads taken from one process unit substrate. Therefore, by, for example, making the platen diameter as small as possible to avoid the interference and to realize both decrease in the width of the substrate and the avoidance of the interference between the encapsulation and the paper 9 and the platen 8. However, to make small the platen diameter has problems such as insufficient strength and deflection of the platen and decrease in the amount of collapse (contact area with the paper) by pressing pressure, and. thus, adversely affects the printing quality. Therefore, about 5 mm to 10 mm is thought to be the lower limit of the platen diameter, which means that, in order to avoid the interference with the encapsulation, it is not possible to make the width of the substrate smaller beyond a certain extent.

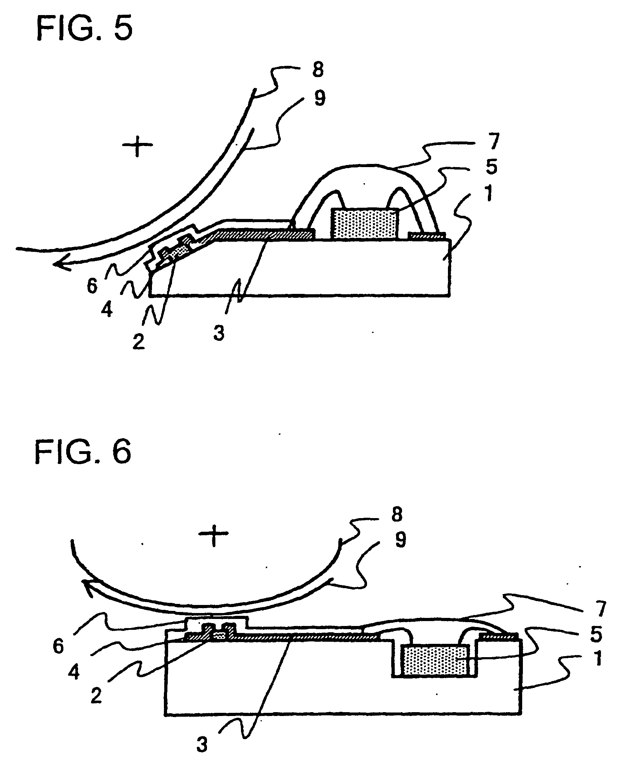

Since, in this constitution, paper is inserted so as to keep out of the encapsulated portion, the paper insert path is curved, and thus, hard cardboard, plastic paper which is difficult to fold, and the like can not beused for printing. Therefore, conventionally, with regard to these kinds of paper difficult to fold, in order to secure a straight path (a straight paper insert path), an end face type thermal head as shown in Fig 4 where the heater resistor 2 is provided on an end face of the substrate and the driving element 5 is provided perpendicularly to the heater resistor 2 and a near edge type thermal head as shown in Fig. 5 where the interference with the encapsulated portion is avoided by providing the heater resistor 2 at an edge portion of the substrate and slanting the thermal head are used. Further, recently, a method has been thought of where, as shown in Fig. 6, a concave portion is processed in a part of the insulating substrate 1 such that a step is provided in the substrate itself for making a portion where the driving element 5 is provided lower than the heater resistor 2.
However, with regard to all of the above-described methods, since the shape of the substrate is complicated, its processing is difficult, and, since its patterning has to be carried out with regard to different surfaces or a surface having a great step, the manufacturing method is complicated and it is difficult to lower the cost.
JP 04140153A discloses a thermal head including heater elements arranged in a line on a front surface of an insulating substrate. The heater elements, which have a protective film, are connected via individual electrodes to a driver chip which is mounted on a rear surface of the substrate via through holes provided in the substrate.
JP 02128863A also discloses a thermal head in which only heating elements are provided on a top surface of an insulating substrate, which are connected to a driver circuit mounted on the rear surface of the substrate via through holes provided in the insulating substrate. Conductors may be passed through the holes to provide the electrical connection between the front and rear of the substrate.
JP 6309964A discloses a thermal head in which thermal resistors, provided with an abrasion resistant film, are formed on.a front surface of an insulating substrate. The insulating substrate is provided with a slit shaped hole and a plurality of round through holes. A common electrode and a plurality of individual electrodes which connect to the thermal resistors are formed respectively through the slit shaped hole and the round through holes. External leads are connected to the common and individual electrodes. The construction is such that the common electrode is relatively short and relatively wide, minimising the voltage drop in the common electrode.
In order to solve these problems, according to the present invention, by the carrying out electric connection between front and rear surfaces of a substrate using turnup terminal connection, a driving element can be provided on the rear surface of a heater resistor.

According to the present invention, there is provided a thermal head comprising heater resistors arranged in a line on a first surface of an insulating substrate, individual electrodes electrically connected to said heater resistors, respectively, common electrodes electrically connected to said individual electrodes through said heater resistors, a protective film for protecting said heater resistors, said individual electrodes, and said common electrodes, and driving elements arranged on a second surface of the substrate opposite to the first surface, characterised in that said individual electrodes are electrically connected to said driving elements by turnup connection terminals extending around an end face of said insulating substrate.
By the present invention, there is no encapsulation on the side where the heater is provided, a straight path which is completely flat can be materialized, and there is no interference between a platen and paper and encapsulation. Therefore, the substrate size can be made smaller. Further, though, conventionally, the platen diameter has to be made smaller to make the thermal head size smaller, a necessary platen diameter can be selected independently of the width of the substrate. Still further, by providing the driving element on the rear surface, area for the provision of the driving element which is conventionally necessary becomes unnecessary, and the width of the substrate can be made further smaller.

Embodiments of the present invention will now be described by way of example only and with reference to the accompanying drawings, in which:-
Fig. 1 is a cross-sectional view of a thermal head in case turnup terminal connection is used according to the present invention;
Fig. 2 is a plan view of the thermal head in case the turnup terminal connection is used according to the present invention;
Fig. 3 is a cross-sectional view showing a conventional thermal head;
Fig. 4 is a cross-sectional view showing another conventional thermal head;
Fig. 5 is a cross-sectional view showing still another conventional thermal head; and
Fig. 6 is a cross-sectional view showing yet still another conventional thermal head.

An embodiment of the present invention is described in the following in detail based on the drawings.

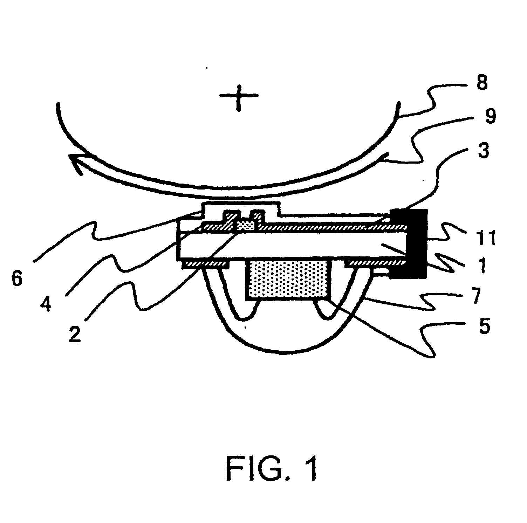

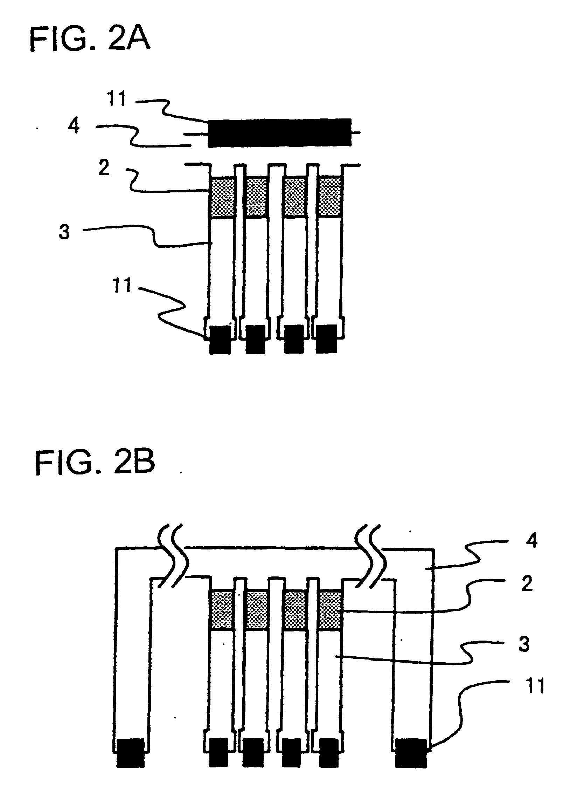

Fig. 1 is a cross-sectional view of an embodiment using turnup terminal connection. As shown in Fig. 2A, the thermal head is of a common electrode constitution where one heater resistor forms one dot.

In Fig. 1, heater resistors 2 each forming one dot are arranged in a line on the front surface side of an insulating substrate 1. One end of each heater resistor is electrically connected to an individual electrode 3 and the other end is electrically connected to a common electrode 4. The periphery is protected by a protective film. One end of each of the individual electrodes is connected to a heater resistor. The other end extends to the vicinity of an end face of the insulating substrate, and is electrically connected to the rear surface side of the insulating substrate 1 using a turnup connection terminal 11. On the rear surface side, the respective turnup connection terminals are connected so as to make one-to-one correspondence to individual electrodes on the rear surface side. Each of the individual electrodes is connected to a driving element 5 by wire bonding, flip chip, or the like. The driving element and the connecting portion are covered with encapsulation 7 formed of a resin of an epoxy system or the like.

On the other hand, with regard to the side of the common electrodes, all the common electrodes are connected together in a strip-like pattern on one side of the insulating substrate 1. Electric connection to the rear surface side of the insulating substrate 1 is carried out through the turnup connection terminals in the pattern. By electric current passing from the common electrodes to the individual electrodes selected by the driving element, a part of the heater resistors generate heat.

Here, preferably, the terminalpitch of the turnup connection terminals is 0.1 mm or smaller and the space between terminal widths is sufficient. This is because the dot pitch in case the density of the heater resistors is 200 DPI (8 dots/mm) is 0.125 mm, and for the purpose of avoiding short circuit between adjacent dots due to misalignment when the terminals are connected or misalignment in patterning between the front and rear surfaces. In case of 200 DPI or more, turnup connection terminals having a narrower pitch according to the size are necessary.

In order to carry out electric connection between the front and rear surfaces of the insulating substrate through the turnup connection terminals, a method where a flexible pattern circuit (FPC) is used and the connection is carried out by soldering or an anisotropic conductive film, a method where clip-like metal terminals are aligned, a method where the connection is carried out by wire bonding, or the like is used. It is necessary that the current capacitance of 5 - 100 mA or more can be secured per terminal.

The above description iswith regard to the case of the thermal head having the common electrode constitution where the strip-like common electrode is provided in the vicinity of the heaters. However, the same can be said with regard to a thermal head of a type where common electrodes are wired on both sides of an insulating substrate as shown in Fig. 2B.

By a thermal head according to the present invention, there is no encapsulation on the side where the heaters are provided, and a straight path which is completely flat can be materialized. By providing the driving elements on the rear surface, area for the provision of the driving elements which is conventionally necessary becomes unnecessary on the side where the heater resistors are provided, and the width of the substrate can be made further smaller. Still further, though conventionally, for the purpose of making the thermal head size smaller, the platen diameter has to be made smaller at the expense of the printing quality, in this invention a necessary platen diameter can be selected independently of the width of the substrate, and the degree of freedom in designing the thermal printer is remarkably improved.

Also, the shape in going through the manufacturing process is simplified, the number of the thermal heads taken from one process unit substrate is increased, and the productivity is improved, which greatly contributes to lowering of the cost.

## Claims

1. A thermal head comprising heater resistors (2) arranged in a line on a first surface of an insulating substrate (1), individual electrodes (3) electrically connected to said heater resistors (2), respectively, common electrodes (4) electrically connected to said individual electrodes (3) through said heater resistors (2), a protective film (6) for protecting said heater resistors (2), said individual electrodes (3), and said common electrodes (4), and driving elements (5) arranged on a second surface of the substrate (1) opposite to the first surface, **characterised in that**:
said individual electrodes (3) are electrically connected to said driving elements (5) by turnup connection terminals (11) extending around an end face of said insulating substrate (1).

2. A thermal head according to claim 1 **characterised in that** each of the turnup connection terminals (11) comprises a flexible substrate having a printed electrical pattern.

3. A thermal head according to claim 2 wherein an anisotropic conductive film is provided between the printed electrical pattern and the individual electrodes (3).

4. A thermal head according to any one of claims 1 to 3 wherein each of the turn-up connection terminals (11) is generally U-shaped.

5. A thermal head according to any one of the preceding claims wherein the common electrodes (4) are connected together in a strip-shaped pattern.

## Patentansprüche

1. Thermokopf, umfassend Heizwiderstände (2), welche in einer Reihe auf einer ersten Fläche eines lsoliersubstrats (1) angeordnet sind, einzelne Elektroden (3), welche jeweils elektrisch mit den Heizwiderständen (2) verbunden sind, gemeinsame Elektroden (4), welche elektrisch mit den einzelnen Elektroden (3) durch die Heizwiderstände (2) verbunden sind, einen Schutzfilm (6) zum Schutz der Heizwiderstände (2), der einzelnen Elektroden (3) und der gemeinsamen Elektroden (4), und Treiberelemente (5), die auf einer zweiten Fläche des Substrats (1) gegenüber der ersten Fläche angeordnet sind, **dadurch gekennzeichnet,**
**dass** die einzelnen Elektroden (3) elektrisch mit den Treiberelementen (5) durch Umschlag-Verbindungsanschlüsse (11) verbunden sind, welche sich um eine Endfläche des Isoliersubstrats (1) herum erstrekken.

2. Thermokopf gemäß Anspruch 1, **dadurch gekennzeichnet, dass** jeder der Umschlag-Verbindungsanschlüsse (11) ein flexibles Substrat umfasst, das ein gedrucktes elektrisches Muster aufweist.

3. Thermokopf gemäß Anspruch 2, wobei ein anisotrop leitender Film zwischen dem gedruckten elektrischen Muster und den einzelnen Elektroden (3) vorgesehen ist.

4. Thermokopf gemäß einem der Ansprüche 1 bis 3, wobei jeder der Umschlag-Verbindungsanschlüsse (11) im Allgemeinen U-förmig ist.

5. Thermokopf gemäß einem der vorhergehenden Ansprüche, wobei die gemeinsamen Elektroden (4) in einem streifenförmigen Muster miteinander verbunden sind.

## Revendications

1. Tête thermique comprenant des résistances chauffantes (2) agencées en une rangée sur une première surface d'un substrat isolant (1), des électrodes individuelles (3) connectées électriquement auxdites résistances chauffantes (2), respectivement, des électrodes communes (4) connectées électriquement auxdites électrodes individuelles (3) par l'intermédiaire desdites résistances chauffantes (2), un film protecteur (6) pour protéger lesdites résistances chauffantes (2), lesdites électrodes individuelles (3) et lesdites électrodes communes (4), et des éléments de commande (5) agencés sur une deuxième surface du substrat (1) opposée à la première surface, **caractérisée en ce que**:
lesdites électrodes individuelles (3) sont connectées électriquement auxdits éléments de commande (5) par des bornes de connexion repliées (11) s'étendant autour d'une face d'extrémité dudit substrat isolant (1).

2. Tête thermique selon la revendication 1, **caractérisée en ce que** chacune des bornes de connexion repliées (11) comprend un substrat flexible comportant un motif électrique imprimé.

3. Tête thermique selon la revendication 2, dans laquelle un film conducteur anisotrope est prévu entre le motif électrique imprimé et les électrodes individuelles (3).

4. Tête thermique selon l'une quelconque des revendications 1 à 3, dans laquelle chacune des bornes de connexion repliées (11) est généralement en forme de U.

5. Tête thermique selon l'une quelconque des revendications précédentes, dans laquelle les électrodes communes (4) sont connectées ensemble à un motif en forme de bande.
